# FASCICULE DE BREVET EUROPEEN

(11) **EP 2 693 065 B1**
(45) Date de publication et mention de la délivrance du brevet: **06.01.2016**
(21) Numéro de dépôt: 13178305.2
(22) Date de dépôt: 29.07.2013
(51) Int. Cl.: F16C 11/06, F16C 23/08, F16C 19/18

(54) **Organe de liaison rotule perfectionné**
Perfektioniertes Gelenkverbindungsorgan
Improved swivelling link member

(30) Priorité: 30.07.2012 FR 1257384
(43) Date de publication de la demande: 05.02.2014
(73) Titulaire: SKF Aerospace France, 26240 Saint-Vallier (FR)
(72) Inventeur: Le Jeune, Gwénolé, Yves, 26210 Saint Sorlin en valloire (FR); Mahéo, Yves, 26140 Anneyron (FR); Seneclauze, Michel, 42410 Chavanay (FR)
(74) Mandataire: Myon, Gérard Jean-Pierre

(56) Documents cités:
- JP-A- 2007 092 856
- US-A- 2 675 281
- US-A- 2 678 246
- AST Bearings LLC: "Technical Information - Bearing materials", , 31 décembre 2010 (2010-12-31), XP002711926, Extrait de l'Internet: URL:http://www.astbearings.com/assets/file s/Bearing-Materials-Technical-Information- Sheet_ENB-04-0553.pdf [extrait le 2013-08-28]

## Description

La présente invention concerne un embout pour une tringlerie de commande, notamment de commande de vol pour un véhicule aérien, comportant un organe de liaison rotule perfectionné. Un tel organe de liaison est également appelé « roulement à rotule sur billes ».

On connaît déjà, dans l'état de la technique, un organe de liaison rotule, par exemple celui désigné sous la référence CN6M, commercialisé par la société SKF.

Un tel organe de liaison rotule comporte habituellement :
- une bague intérieure, de forme générale de révolution autour d'un premier axe, présentant une surface extérieure munie d'une piste de roulement intérieure,
- une bague extérieure, de forme générale de révolution autour d'un second axe, présentant une surface intérieure munie d'une piste de roulement extérieure,
- au moins une rangée de billes alignées circonférentiellement, généralement deux rangées de billes, s'étendant radialement entre la piste de roulement intérieure et la piste de roulement extérieure.

Dans la présente description, les termes « intérieur » et « extérieur » sont considérés en fonction des positionnements radiaux par rapport au premier, respectivement au second, axe. En particulier, lorsque les premier et second axes sont confondus, la bague intérieure, respectivement la piste intérieure, est plus proche des axes que la bague extérieure, respectivement la piste extérieure. Par ailleurs, une surface est dite intérieure lorsqu'elle est tournée vers les axes, et extérieure lorsqu'elle est tournée à l'opposé des axes.

Un tel organe de liaison autorise un mouvement de rotation de la bague extérieure autour du second axe, par rapport à la bague intérieure, ou, respectivement, un mouvement de rotation de la bague intérieure autour du premier axe, par rapport à la bague extérieure.

L'organe de liaison autorise également un mouvement relatif dit de « rotulage », correspondant à une rotation de la bague extérieure par rapport à la bague intérieure autour de tout axe (dit « axe de rotulage ») perpendiculaire au premier axe, ou, respectivement, à une rotation de la bague intérieure par rapport à la bague extérieure autour de tout axe de rotulage perpendiculaire au second axe.

Il apparaît que, dans un tel organe de liaison rotule, le couple exercé lors d'un mouvement de rotulage sur la bague extérieure est généralement élevé, ce qui entraine une usure de cette bague extérieure.

On connaît également d'autres organes de liaison rotule, notamment d'après US 2 675 281 ou US 2 678 246.

L'invention a notamment pour but de remédier à l'inconvénient précité, en fournissant un organe de liaison rotule amélioré, dans lequel les frottements et les couples de rotulage appliqués à la bague extérieure sont réduits.

A cet effet, l'invention a notamment pour objet un embout pour une tringlerie de commande selon la revendication 1.

Du fait de la forme sphérique de la piste de roulement intérieure, le mouvement de rotulage est réalisé par roulement des billes sur cette piste sphérique. Ainsi, le couple de rotulage est appliqué sur la bague intérieure, et non sur la bague extérieure. Or, la bague intérieure étant plus proche de l'axe de rotulage que la bague extérieure, il apparaît clairement qu'un couple de rotulage est appliqué sur la bague intérieure est inférieur à un couple de rotulage appliqué à une bague extérieure.

Contrairement à un organe de liaison rotule de l'état de la technique, le contact des billes sur la piste de roulement intérieure sphérique est ponctuel, si bien que les frottements entre ces billes et cette piste de roulement intérieure sont faibles lors d'un mouvement de rotulage. En effet, un organe de liaison de l'état de la technique présentait un contact elliptique enveloppant entre les bagues intérieure et extérieure, qui généraient donc un couple plus élevé.

Par ailleurs, la piste de roulement extérieure présente une forme de gorge complémentaire à la forme des billes. Cette piste de roulement extérieure est notamment destinée à guider les billes lors d'un mouvement de rotation de la bague extérieure autour du second axe. Du fait de la forme de la gorge complémentaire de la forme des billes, la surface de contact entre cette gorge et ces billes est relativement élevée, si bien que la pression de contact sur cette piste de roulement extérieure, répartie sur toute la surface de contact, est réduite.

Toutes ces caractéristiques permettent d'augmenter la durée de vie de l'organe de liaison rotule, en transférant les pressions de contact dimensionnantes du roulement sur le matériau plus résistant, c'est-à-dire l'acier à roulement de la bague intérieure. En outre, du fait des contraintes réduites appliquées à l'organe de liaison, il est possible de simplifier les traitements thermiques nécessaires à appliquer à cet organe de liaison, et également de supprimer une étape de cadmiage lors de la fabrication de cet organe de liaison.

Par ailleurs, du fait de cette réduction des contraintes, au moins l'une des bagues intérieure et extérieure est réalisée en acier inoxydable, de dureté inférieure à 58 HRC. Un tel acier présente des avantages d'un point de vue économique, et présente une bonne tenue à la corrosion, puisqu'il est relativement peu chargé en carbone.

Un embout de tringlerie de commande selon l'invention peut comporter en outre l'une ou plusieurs des caractéristiques suivantes, prises seules ou selon toutes les combinaisons techniquement envisageables.
- L'organe de liaison rotule comporte deux rangées de billes, disposées symétriquement par rapport à un plan perpendiculaire au second axe, passant par un sommet de la sphère tronquée de la surface extérieure de la bague intérieure.
- La bague intérieure comporte : un manchon de forme générale de révolution autour du premier axe, un élément en forme de sphère tronquée à des première et seconde extrémités, solidaire du manchon, formant la piste de roulement intérieure de la bague intérieure, et des premier et second éléments annulaires, emmanchés de part et d'autre de l'élément sphérique sur le manchon, présentant une dimension radiale extérieure supérieure ou égale à la dimension radiale extérieure de l'élément sphérique à sa première ou seconde extrémité.
- Lorsque les bagues intérieure et extérieure sont disposées de sorte que les premier et second axes sont confondus, la bague intérieure présente une dimension dans la direction longitudinale des axes supérieure à la dimension de la bague extérieure dans cette même direction longitudinale.
- L'une des bagues intérieure ou extérieure porte un élément de limitation d'une rotation autour de tout axe de rotulage perpendiculaire aux premiers ou second axes, destiné à former une butée s'opposant au mouvement de la bague intérieure ou extérieure lorsqu'elle se déplace en rotation autour de tout axe de rotulage.

L'invention concerne également un ensemble d'un arbre et d'un embout tel que défini précédemment, l'arbre étant solidarisé à la bague intérieure de l'embout.

L'invention sera mieux comprise à la lecture de la description qui va suivre, donnée uniquement à titre d'exemple et faite en se référant aux figures annexées parmi lesquelles :
- la figure 1 est une vue en perspective éclatée d'un organe de liaison rotule selon un exemple de mode de réalisation de l'invention ;
- la figure 2 est une vue en coupe transversale de l'organe de liaison rotule de la figure 1 ;
- la figure 3 est une vue similaire à la figure 2 de l'organe de liaison rotule, auquel un mouvement de rotulage est appliqué.

On a représenté sur les figures un organe 10 de liaison rotule. Cet organe de liaison 10 comporte une bague intérieure 12, une bague extérieure 14, et au moins une rangée de billes 16 alignées circonférentiellement, chaque bille 16 s'étendant radialement entre la bague intérieure 12 et la bague extérieure 14.

Avantageusement, au moins l'une des bagues intérieure 12 et extérieure 14 est réalisée en acier inoxydable, de préférence présentant une dureté inférieure à 58 HRC. Un tel acier est économique, et présente une bonne tenue à la corrosion, du fait qu'il est relativement peu chargé en carbone.

La bague intérieure 12 présente une forme générale de révolution autour d'un premier axe X, présentant une surface intérieure 12A sensiblement cylindrique et une surface extérieure 12B munie d'une piste de roulement intérieure 18 pour les billes 16.

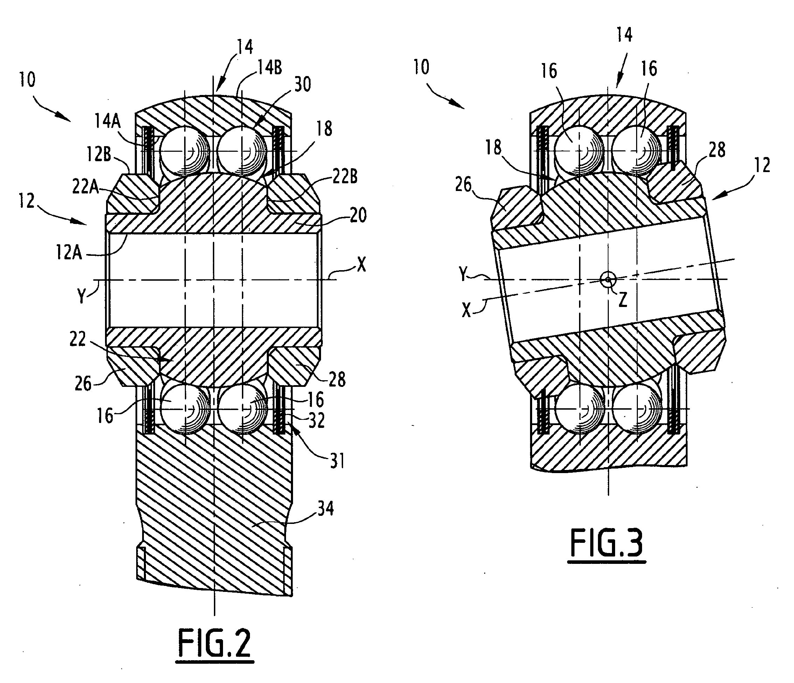

Comme cela est notamment représenté sur la figure 2, la bague intérieure 12 est formée d'un manchon 20, de forme générale de révolution autour du premier axe X, ainsi que d'un élément 22 en forme de sphère tronquée à des première 22A et seconde 22B extrémités dans la direction du premier axe X.

Cet élément sphérique 22 est solidaire du manchon 20, et forme la piste de roulement intérieure 18 de la bague intérieure 12.

Dans l'exemple représenté, l'élément sphérique 22 est venu de matière avec le manchon 20. En variante, il pourrait être rapporté, par exemple par emmanchement, sur ce manchon 20.

Avantageusement, la bague intérieure 12 comporte par ailleurs des premier 26 et second 28 éléments annulaires, emmanchés sur le manchon 20 de part et d'autre de l'élément sphérique 22, chacun en contact avec l'une des premier 22A et seconde 22B extrémités respective de l'élément sphérique 22. De préférence, chacun de ces premier 26 et second 28 éléments annulaires présente une dimension radiale extérieure supérieure ou égale à la dimension radiale extérieure de l'élément sphérique 22 à sa première 22A ou seconde 22B extrémité correspondante.

La bague extérieure 14 présente une forme générale de révolution autour d'un second axe Y. Cette bague extérieure 14 présente une surface intérieure 14A munie d'au moins une piste de roulement extérieure 30 pour les billes 16, et une surface extérieure 14B.

En particulier, la surface intérieure 14A est munie d'une piste de roulement extérieure 30 pour chaque rangée de billes 16. Chaque piste de roulement extérieure 30 présente alors la forme d'une gorge complémentaire de la forme des billes 16 de la rangée correspondante.

Dans l'exemple représenté, l'organe de liaison rotule 10 comporte deux rangées de billes 16, disposées symétriquement par rapport à un plan perpendiculaire au second axe Y, et passant par un sommet de l'élément sphérique 22, ledit sommet étant le point sur cette sphère qui est le plus éloigné du second axe Y.

Les formes des pistes de roulement intérieure 18 et extérieure 30 autorise divers mouvements de rotation des bagues intérieure 12 et extérieure 14 l'une relativement à l'autre.

En particulier, la bague intérieure 12 est mobile en rotation autour du premier axe X par rapport à la bague extérieure 14 et, réciproquement, la bague extérieure 14 est mobile en rotation autour du second axe Y par rapport à la bague intérieure 12.

Par ailleurs, la bague extérieure 14 est mobile selon un mouvement dit de « rotulage », c'est-à-dire mobile en rotation par rapport à la bague intérieure 12 autour de tout axe (dit axe de rotulage) perpendiculaire au premier axe X. Réciproquement, la bague intérieure 12 est mobile selon un mouvement de « rotulage », en rotation par rapport à la bague extérieure 14 autour de tout axe (dit axe de rotulage) perpendiculaire au second axe Y.

Sur la figure 2, les premier X et second Y axes sont représentés confondus, l'angle de rotulage étant nul. En revanche, sur la figure 3, les premier X et second Y axe sont représentés décalés d'un angle de rotulage autour d'un axe de rotulage Z perpendiculaire au second axe Y, la bague intérieure 12 ayant subit une rotation de cet angle de rotulage autour de l'axe de rotulage Z, par rapport à la bague extérieure 14.

Avantageusement, les premier 26 et second 28 éléments annulaires de la bague intérieure 12 forment des éléments de limitation des mouvements de rotulage, c'est-à-dire de toute rotation autour d'un axe de rotulage. En particulier, ces éléments 26, 28 forment des butées s'opposant au mouvement de la bague intérieure 12 lorsque celle-ci se déplace en rotation autour de tout axe de rotulage, comme cela est notamment représenté sur la figure 3.

Conformément au mode de réalisation décrit, les éléments annulaires de limitation 26, 28 définissent un angle maximal de rotulage en formant une butée pour les billes 16, ces billes 16 entrant en butée contre l'un des éléments annulaires 26, 28 lorsque l'angle de rotulage atteint sa valeur limite.

En variante, on peut prévoir d'agencer un élément de limitation sur la bague extérieure 14, destiné à entrer en contact avec la bague intérieure 12 pour limiter le mouvement de rotulage.

Conformément à l'exemple représenté, l'organe de liaison rotule 10 est dit « à bague intérieure large », c'est-à-dire que, lorsque les bagues intérieure 12 et extérieure 14 sont disposées de sorte que les premiers X et second Y axes sont confondus, comme cela est représenté sur la figure 2, la bague intérieure 12 présente une dimension dans la direction longitudinale des axes X et Y supérieure à la dimension de la bague extérieure 14 dans cette même direction longitudinale. Une telle bague intérieure large facilite le montage et le démontage de l'organe de liaison 10.

Avantageusement, l'organe de liaison 10 comporte des moyens d'étanchéité 31, comportant des joints d'étanchéité 32 disposés de part et d'autre des billes 16 dans la direction longitudinale définie par le second axe Y, et s'étendant radialement entre la bague intérieure 12 et la bague extérieure 14. Chaque joint d'étanchéité 32 présente une forme générale annulaire, présentant un bord extérieur solidarisé avec la surface intérieure 14A de la bague extérieure 14, et un bord intérieur formant une lèvre en contact avec la surface extérieure 12B de la bague intérieure 12. Ces joints d'étanchéités 32 sont par exemple réalisés en caoutchouc.

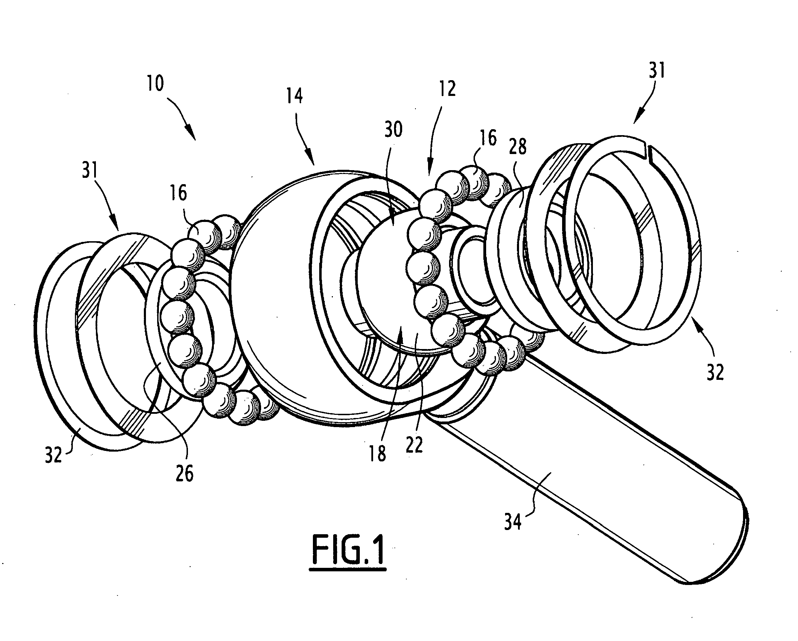

Un tel organe de liaison de rotule 10 équipe un embout pour une tringlerie de commande, notamment une tringlerie de commande de vol pour un véhicule aérien, tel qu'un hélicoptère. Dans ce cas, l'embout comporte une tige 34 représenté sur les figures 1 et 2, par exemple une tige de bielle, solidarisée à la bague extérieure 14, et un arbre (non représenté) est solidarisé à la bague intérieure 12, en passant dans l'espace délimité par sa surface intérieure 12A.

On notera que l'invention n'est pas limitée au mode de réalisation précédemment décrit, mais pourrait présenter diverses variantes sans sortir du cadre des revendications.

## Revendications

1. Embout pour une tringlerie de commande, notamment de commande de vol pour un véhicule aérien, comprenant un organe de liaison rotule (10), et dans lequel :
- l'organe de liaison rotule comporte une bague intérieure (12), de forme générale de révolution autour d'un premier axe (X), présentant une surface extérieure (12B) munie d'une piste de roulement intérieure (18),
- l'organe de liaison rotule comporte une bague extérieure (14), de forme générale de révolution autour d'un second axe (Y), présentant une surface intérieure (14A) munie d'une piste de roulement extérieure (30),
- l'organe de liaison rotule comporte au moins une rangée de billes (16) alignées circonférentiellement, s'étendant radialement entre la piste de roulement intérieure (18) et la piste de roulement extérieure (30),
- l'embout comporte une tige (34), par exemple une tige de bielle, solidarisée à la bague extérieure (14), la bague intérieure (12) étant adaptée pour être solidarisée à un arbre,
**caractérisé en ce que** :
- la surface extérieure (12B) de la bague intérieure (12) comporte une partie (22) de forme générale de sphère tronquée, formant la piste de roulement intérieure (18),
- la surface intérieure (14A) de la bague extérieure (14) comporte, pour chaque rangée de billes (16), une gorge (30) de forme complémentaire de celle des billes (16) de cette rangée, ladite gorge (30) formant la piste de roulement extérieure,
- au moins l'une des bagues intérieure (12) ou extérieure (14) est réalisée en acier inoxydable présentant une dureté inférieure à 58 HRC.

2. Embout selon la revendication 1, dans lequel l'organe de liaison rotule comporte deux rangées de billes (16), disposées symétriquement par rapport à un plan perpendiculaire au second axe (Y), passant par un sommet de la sphère tronquée (22) de la surface extérieure (12B) de la bague intérieure (12).

3. Embout selon la revendication 1 ou 2, dans lequel la bague intérieure (12) comporte :
- un manchon (20) de forme générale de révolution autour du premier axe (X),
- un élément (22) en forme de sphère tronquée à des première (22A) et seconde (22B) extrémités, solidaire du manchon (20), formant la piste de roulement intérieure (18) de la bague intérieure (12), et
- des premier (26) et second (28) éléments annulaires, emmanchés de part et d'autre de l'élément sphérique (22) sur le manchon (20), présentant une dimension radiale extérieure supérieure ou égale à la dimension radiale extérieure de l'élément sphérique (22) à sa première (22A) ou seconde (22B) extrémité.

4. Embout selon l'une quelconque des revendications précédentes, dans lequel, lorsque les bagues intérieure (12) et extérieure (14) sont disposées de sorte que les premier (X) et second (Y) axes sont confondus, la bague intérieure (12) présente une dimension dans la direction longitudinale des axes (X, Y) supérieure à la dimension de la bague extérieure (14) dans cette même direction longitudinale.

5. Embout selon l'une quelconque des revendications précédentes, dans lequel l'une des bagues intérieure (12) ou extérieure (14) porte un élément de limitation (26, 28) d'une rotation autour de tout axe de rotulage perpendiculaire aux premiers (X) ou second (Y) axes, destiné à former une butée s'opposant au mouvement de la bague intérieure (12) ou extérieure (14) lorsqu'elle se déplace en rotation autour de tout axe de rotulage.

6. Ensemble d'un arbre et d'un embout selon l'une quelconque des revendications précédentes, **caractérisé en ce que** la bague intérieure (12) de l'embout est solidarisée à l'arbre.

## Patentansprüche

1. Ansatzstück für ein Steuer-Gestänge, insbesondere zur Flugsteuerung für ein Luftfahrzeug, aufweisend ein Kugelgelenk-Verbindungsorgan (10), und bei welchem
- das Kugelgelenk-Verbindungsorgan einen Innenring (12) einer im Allgemeinen Umlauf-Form um eine erste Achse (X) herum aufweist, der eine Außenfläche (12B) hat, die mit einer inneren Lagerbahn (18) versehen ist,
- das Kugelgelenk-Verbindungsorgan einen Außenring (14) einer im Allgemeinen Umlauf-Form um eine zweite Achse (Y) herum aufweist, der eine Innenfläche (14A) hat, die mit einer äußeren Lagerbahn (30) versehen ist,
- das Kugelgelenk-Verbindungsorgan wenigstens eine Reihe von Kugeln (16) aufweist, die umfänglich ausgerichtet sind und sich radial zwischen der inneren Lagerbahn (18) und der äußeren Lagerbahn (30) erstrecken,
- das Ansatzstück eine Stange (34) aufweist, beispielsweise eine Lenkstange, die mit dem Außenring (14) fest verbunden ist, wobei der Innenring (12) angepasst ist, um mit einer Achse fest verbunden zu sein,
**dadurch gekennzeichnet, dass**
- die Außenfläche (12B) des Innenrings (12) einen Abschnitt (22) einer im Allgemeinen abgestumpften Kugel-Form aufweist, der die innere Lagerbahn (18) bildet,
- die Innenfläche (14A) des Außenrings (14) für jede Kugelreihe (16) eine Rille (30) einer Form aufweist, die zu jener der Kugeln (16) dieser Reihe komplementär ist, wobei die Rille (30) die äußere Lagerbahn bildet,
- wenigstens einer von dem Innenring (12) oder dem Außenring (14) aus nicht rostendem Stahl realisiert ist, der eine Härte kleiner als 58 HRC hat.

2. Ansatzstück gemäß Anspruch 1, bei welchem das Kugelgelenk-Verbindungsorgan zwei Reihen von Kugeln (16) aufweist, die bezüglich einer Ebene senkrecht zur zweiten Achse (Y) symmetrisch angeordnet sind, durch welche ein Scheitel der abgestumpften Kugel (22) der Außenfläche (12B) des Außenrings (12) verläuft.

3. Ansatzstück gemäß Anspruch 1 oder 2, bei welchem der Innenring (12) aufweist:
- eine Muffe (20) einer im Allgemeinen Umlauf-Form um die erste Achse (X) herum,
- ein Element (22) in Form einer Kugel, die an einem ersten (22A) und einem zweiten (22B) Ende abgestumpft ist, das mit der Muffe (20) fest verbunden ist und die innere Lagerbahn (18) des Innenrings (12) bildet, und
- ein erstes (26) und ein zweites (28) Ringelement, die beidseitig des Kugel-Elements (22) auf die Muffe (20) aufgesetzt sind und die eine radiale äußere Abmessung haben, die größer ist als oder gleich ist wie die radiale äußere Abmessung des Kugel-Elements (22) an seinem ersten (22A) oder zweiten (22B) Ende.

4. Ansatzstück gemäß irgendeinem der vorhergehenden Ansprüche, bei welchem, wenn der Innenring (12) und der Außenring (14) derart angeordnet sind, dass die erste (X) und die zweite (Y) Achse zusammenfallen, der Innenring (12) eine Abmessung in der Längsrichtung der Achsen (X, Y) hat, die größer ist als die Abmessung des Außenrings (14) in dieser gleichen Längsrichtung.

5. Ansatzstück gemäß irgendeinem der vorhergehenden Ansprüche, bei welchem einer von dem Innenring (12) oder dem Außenring (14) ein Element (26, 28) zur Beschränkung einer Rotation ganz um eine Rotations-Achse herum, die senkrecht zur ersten (X) oder zweiten (Y) Achse ist, trägt, welches dazu bestimmt ist, einen Anschlag zu bilden, der einer Bewegung des Innenrings (12) oder des Außenrings (14) entgegenwirkt, wenn er sich ganz um die Rotations-Achse herum drehverlagert.

6. Baugruppe aus einer Achse und einem Ansatzstück gemäß irgendeinem der vorhergehenden Ansprüche, **dadurch gekennzeichnet, dass** der Innenring (12) des Ansatzstücks mit der Achse fest verbunden ist.

## Claims

1. End fitting for a control linkage, in particular for flight controls for an aircraft, comprising a ball-and-socket joint member (10), and wherein:
- the ball-and-socket joint member (10) comprises an inner ring (12), of a general shape of revolution around a first axis (X), having an outer surface (12B) provided with an inner raceway (18),
- the ball-and-socket joint member (10) comprises an outer ring (14), of a general shape of revolution around a second axis (Y), having an inner surface (14A) provided with an outer raceway (30),
- the ball-and-socket joint member (10) comprises at least one row of balls (16) aligned circumferentially, extending radially between the inner raceway (18) and the outer raceway (30),
- the end fitting comprises a rod (34), for example a connecting rod, integral with the outer ring (14), the inner ring (12) being adapted to be integral with a shaft,
**characterised in that**:
- the outer surface (12B) of the inner ring (12) comprises a portion (22) with a generally truncated sphere shape, forming the inner raceway (18),
- the inner surface (14A) of the outer ring (14) comprises, for each row of balls (16), a groove (30) of a shape complementary to that of the balls (16) of this row, said groove (30) forming the outer raceway,
- at least one of the inner (12) or outer (14) rings is made of stainless steel having a hardness lower than 58 HRC.

2. The end fitting according to claim 1, wherein the ball-and-socket joint comprises two rows of balls (16), arranged symmetrically in relation to a plane perpendicular to the second axis (Y), passing through a top of the truncated sphere (22) of the outer surface (12B) of the inner ring (12).

3. The end fitting according to claim 1 or 2, wherein the inner ring (12) comprises:
- a sleeve (20) of a general shape of revolution around the first axis (X),
- an element (22) in the shape of a truncated sphere at the first (22A) and second (22B) ends, integral with the sleeve (20), forming the inner raceway (18) of the inner ring (12), and
- first (26) and second (28) annular elements, stamped on either side of the spherical element (22) on the sleeve (20), having an outer radial dimension that is greater than or equal to the outer radial dimension of the spherical element (22) at its first (22A) or second (22B) end.

4. The end fitting according to any of preceding claims, wherein, when the inner (12) and outer (14) rings are arranged in such a way that the first (X) and second (Y) axes are confounded, the inner ring (12) has a dimension in the longitudinal direction of the axes (X, Y) that is greater than the dimension of the outer ring (14) in this same longitudinal direction.

5. The end fitting according to any of preceding claims, wherein one of the inner (12) or outer (14) rings carries an element for limiting (26, 28) a rotation around any swivel axis perpendicular to the first (X) or second (Y) axes, intended to form an abutment that opposes the movement of the inner (12) or outer (14) ring when it is displaced in rotation around any swivel axis.

6. An assembly of a shaft and an end fitting as claimed in any preceding claim, **characterized in that** the inner ring (12) of the end fitting is integral with the shaft.
